Europäisches Patentamt

European Patent Office

Office européen des brevets

(11) Publication number: **0 346 453 B1**

## EUROPEAN PATENT SPECIFICATION

(45) Date of publication of patent specification: **29.06.94**  (51) Int. Cl.5: **G11B 5/187**

(21) Application number: **89901668.7**

(22) Date of filing: **19.12.88**

(86) International application number:
**PCT/US88/04597**

(87) International publication number:
**WO 89/06421 (13.07.89 89/15)**

(54) **MAGNETIC HEAD WITH CONSTANT AREA WEAR PROFILE.**

(30) Priority: **28.12.87 US 138756**

(43) Date of publication of application:
**20.12.89 Bulletin 89/51**

(45) Publication of the grant of the patent:
**29.06.94 Bulletin 94/26**

(84) Designated Contracting States:
**DE FR GB**

(56) References cited:
**EP-A- 0 181 263**
**DE-A- 3 428 800**
**FR-A- 1 374 595**
**US-A- 3 526 885**

(73) Proprietor: **EASTMAN KODAK COMPANY**
**350 State Street**
**Rochester New York 14850(US)**

(72) Inventor: **MC CLURE, Richard, J.**
**9988 Cummins Place**
**San Diego, CA 92131(US)**

(74) Representative: **Blickle, K. Werner, Dipl.-Ing. et al**
**KODAK AKTIENGESELLSCHAFT**
**Patentabteilung**
**D-70323 Stuttgart (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3. 10/3.0 9/3.3.3)

**Description**

BACKGROUND OF THE INVENTION

Field of the Invention

This invention relates in general to magnetic recording, and in particular to an improved design for a magnetic head especially useful with a magnetic tape system.

Description Relative to the Prior Art

A major concern in any recording system is that of the head-to-medium interface. Ideally, the head should make intimate contact with the recording medium to minimize the spacing loss as defined by the following expression:

$$SL = 55 \frac{d}{\lambda}$$

where SL is the spacing loss in decibels,
λ is the recorded wavelength, and
d is the head-to-medium spacing distance.

Various efforts have been employed, not only to minimize head-to-medium spacing, but also to provide easy and smooth passage of the medium over the face of the head, as well as to minimize head wear. For any of a number of reasons, prior art attempts at providing such head qualities are wanting: For example, in connection with a tape medium system, no known prior art head simultaneously

a. works to eliminate the space formed by an air bearing between the head and the tape, which undesirably serves to increase the aforesaid spacing loss, and
b. works to present a virtually invariant head structure--despite wear, and irrespective of the direction of tape movement relative to the head--to the tape transmitted thereacross, whereby the performance of system electronics, and tape tensioning and servos therefor, may be virtually standardized and/or uniformly operated for the full life of the head.

Prior art patents which may be considered in relation to the invention are: U.S. Patent 3,947,887 entitled "Transducer Head Contour And Method of Generating Same", and U.S. Patent 4,669,016 entitled, "Thin Layered Magnetic Head".

European Patent EPA-0-181-263 shows a head whose profile is made close to the natural bending radius of the tape, where the head wears, with use, to this natural bending radius

SUMMARY OF THE INVENTION

At the heart of the invention is a head cross section that provides a constant area wear profile to the medium which travels thereacross. The constant area wear profile results from the "combined" use of a common radius of curvature for both the natural bending radius of the medium as well as the medium-contacting surface of the head, taken together with the requirement that the leading and trailing medium-contacting parts of the head form air-skiving edges which are essentially parallel to the force- (or pressure-) direction associated with the medium-contacting interface. Because of the commonality of the radii of curvature, the medium-to-head pressure applied to the head face is entirely uniform thereacross; and because of the force- (or pressure-) direction parallelism of the head edges, not only is spacing-loss-producing air precluded from between the head and medium, but also the uniformity of the medium-to-head pressure, as a function of head wear, is essentially preserved. Thus, during the wear-life of the head, the interaction between the head and medium is both excellent, and essentially continuously the same, whereby system parameters involving electronics, tape tensioning servos, and the like may be simplified.

A recording system according to the invention is laid down in Claim 1. Head assemblies having a constant area wear profile are described in EP-A-397713 and EP-A-373179, both having the same priority date as that of the application.

The invention, as well as the prior art, will now be described with reference to the figures, of which
Fig. 1 is a schematic diagram illustrating the cross-section of a typical prior art magnetic head,
Fig. 2 is a schematic diagram illustrating a magnetic tape recording system utilizing a magnetic head pursuant to the invention, and
Fig. 3 is a perspective view showing a magnetic head according to another embodiment of the invention.

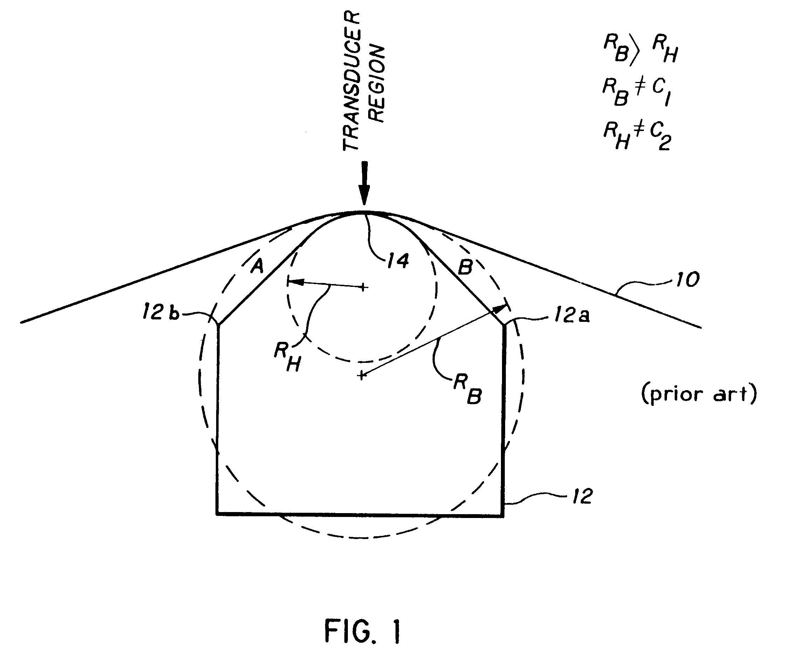

Referring to the prior art showing of Fig. 1, a magnetic tape 10 is indicated in cooperation with a prior art magnetic head 12. The head 12 has a representative prior art cross-section and, at the tape-contacting surface 14, has a radius of curvature $R_H$. Conventionally, such a cross-section is achieved by rounding the head surface to an acceptable degree, as noted by inspection. The tape 10 has, as indicated, a natural bending radius of curvature $R_B$ that is significantly greater than $R_H$. (With $R_B$ greater than $R_H$, undue pressure can exist at the head-to-tape interface; with, however, $R_H$ being greater than $R_B$, the leading and trailing edges 12a, 12b of the head 12 can be forced to carry too much of the load of the tape 10, thereby relieving what would otherwise be appropriate head-to-tape pressure at the "transducer region" of the head.)

The following will be appreciated from an examination of Fig. 1:

a. as the head 12 wears, $R_H$ will increase ($R_H \neq C_2$, i.e., $R_H$ does not have a constant value $C_2$), thereby tending to change the head-to-tape pressure in the head "transducer region",

b. air will be entrained, regardless of the tape direction in the region A, B between the head 12 and tape 10, thereby altering the spacing-loss factor,

c. as the head wears, $R_B$ will change ($R_B \neq C_1$, i.e., the tape, being forced into contact with a changing $R_H$, does not maintain a constant value $C_1$ for the natural bending radius $R_B$), thereby increasing the amount of head surface with which the tape is in contact

d. a, b, c above, singly and together, will cause tape tension, servo, electronic, and other, concerns.

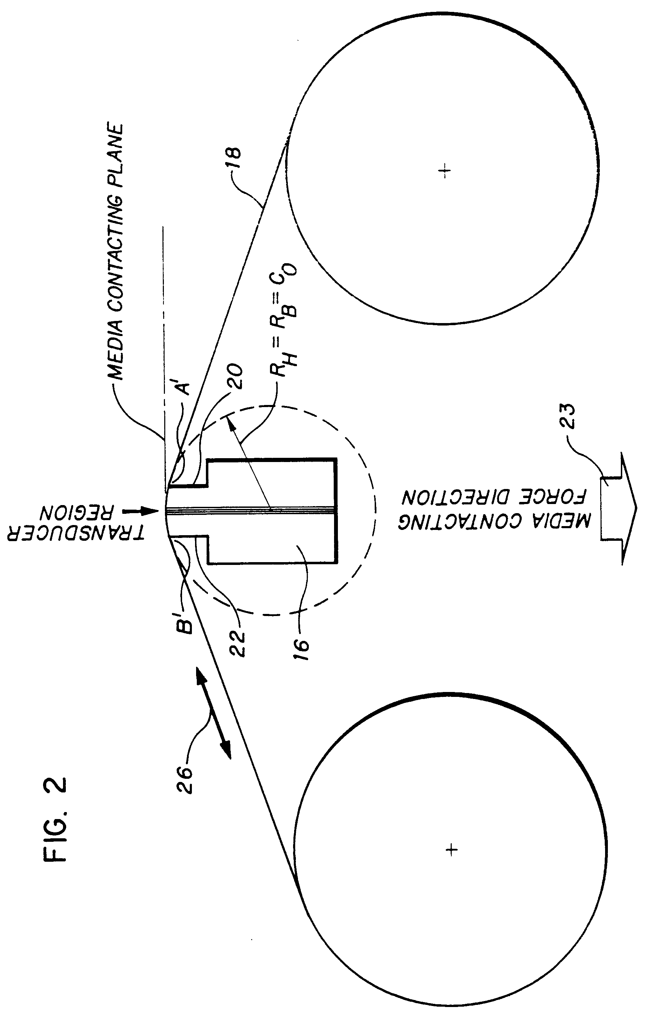

To obviate all of the above described problems associated with prior art heads, the invention, as indicated in Fig. 2, provides that the radius of curvature ($R_H$) of the head 16 (in this case, a thin-film head) be matched to the natural bending radius ($R_B$) of the medium 18; and that the medium-contacting surface of the head have leading and trailing edges 20, 22 which are essentially parallel to the direction of the medium-contacting pressure or force 23. As will be appreciated, the aforesaid combination provides:

a. uniform pressure across the medium-contacting face of the head

b. a cross-section which is such that it provides the head with a constant wear area so that, despite such head wear, the uniform-pressure of (a) above remains essentially constant ($R_H = R_B = C_0$) for the life of the head 16, and

c. skiving of air from entrainment at the shoulder-formed points A', B' to preserve intimate head-to-medium contact,

whereby irrespective of the direction of medium-travel 26, system electronics, tape tensioning, etc., may be optimized...and will essentially remain so as though in an invariant system.

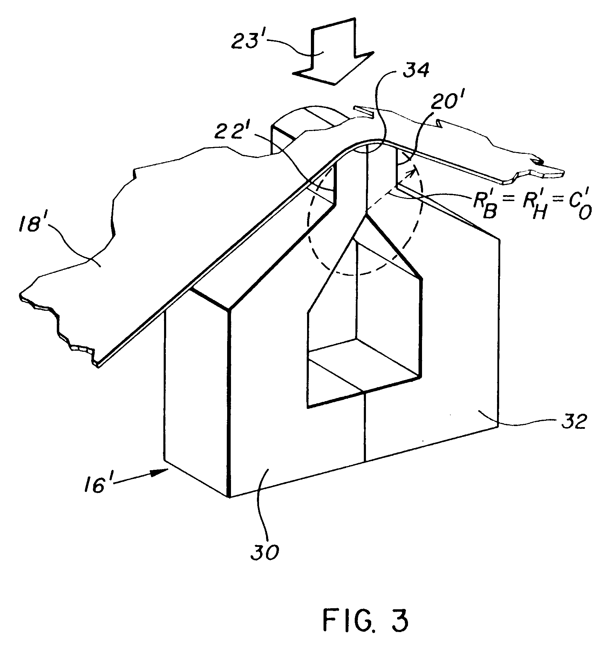

While the invention is cast in the environment of a thin-film head 16, it can, as indicated in Fig. 3, be employed in, say, a head 16' comprised of first and second half cores 30, 32 of ferrite material...the point being that, in such a head 16', the medium-contacting surface 34 of the head has, pursuant to the invention, a radius of curvature $R'_H$ equal to the natural bending radius $R'_B$ of the tape 18', and that the medium-contacting half-core edges 20', 22' are parallel to the force-direction 23', thereby to preserve a constant wear area and good medium-to-head interface despite head wear.

## Claims

1. A recording system comprises a magnetic head (16) with a medium-contacting surface, means for conveying a recording medium (18) over said head surface, said head comprises leading and trailing edges (20, 22) whereby, because of the orientation of said leading and trailing edges (20, 22), air is substantially prevented from being entrained into the space between said medium (18) and said head (16), the head (16) of said record system is characterized by:

the radius of curvature ($R_H$) of said head surface is the same as the natural bending radius ($R_B$) of said medium against said head (16), thereby a substantially uniform pressure of said medium (18) against said head surface is provided, and said leading and trailing edges (20, 22) are parallel with respect to the direction (23) of pressure that the area of said medium contacting surface remains substantially unchanged despite of wear of said surface.

## Patentansprüche

1. Aufzeichnungssystem bestehend aus einem Magnetkopf (16) mit einem das Aufzeichnungsmedium berührenden Kopfspiegel, Mitteln zum Führen eines Aufzeichnungsmediums (18) über den Kopfspiegel, wobei der Magnetkopf Vor- und Nachlaufkanten (20, 22) aufweist und aufgrund der Ausrichtung dieser Kanten das Eindringen von Luft in die Zone zwischen dem Aufzeichnungsmedium (18) und Kopfspiegel im wesentlichen verhindert wird, wobei der Magnetkopf (16) des Aufzeichnungssystems <u>dadurch gekennzeichnet</u> ist, daß der Krümmungsradius ($R_H$) des Kopfspiegels und der natürliche Biegungsradius ($R_V$), mit dem das Aufzeichnungsmedium den Kopfspiegel umschlingt, identisch sind, wodurch ein im wesentlichen gleichbleibender Druck des Aufzeichnungsmediums (18) gegen den Kopfspiegel gewährleistet ist, und daß die Vor- und Nachlaufkanten (20, 22) bezüglich der Druckrichtung (23) parallel verlaufen, so daß die Geometrie des das Aufzeichnungsmedium berührenden Kopfspiegels trotz Abnutzung im wesentlichen unverändert bleibt.

**Revendications**

1.  Système d'enregistrement qui comprend une tête magnétique (16) avec une surface de contact du support, un moyen pour transporter un support d'enregistrement (18) sur ladite surface de la tête, ladite tête comprend des bords avant et arrière (20, 22), d'où il résulte que dû à l'orientation desdits bords avant et arrière (20, 22) l'air ne peut pratiquement pas être entraîné dans l'espace situé entre ledit support (18) et ladite tête (16), la tête (16) dudit système d'enregistrement étant caractérisée en ce que :

    le rayon de courbure ($R_H$) de ladite surface de la tête est le même que le rayon de courbure naturelle ($R_B$) dudit support contre ladite tête (16), procurant de ce fait une pression pratiquement uniforme dudit support (18) contre ladite surface de la tête et lesdits bords avant et arrière (20, 22) sont parallèles par rapport à la direction (23) de la pression de sorte que la superficie de ladite surface de contact du support reste pratiquement non changée en dépit de l'usure de ladite surface.

$R_B \rangle R_H$

$R_B \neq C_1$

$R_H \neq C_2$

FIG. 1

(prior art)

TRANSDUCER REGION

FIG. 2

MEDIA CONTACTING PLANE

$R_H = R_B = C_0$

TRANSDUCER REGION

MEDIA CONTACTING FORCE DIRECTION

18

20

$A'$

$B'$

22

16

26

23

6

FIG. 3